# EUROPÄISCHE PATENTSCHRIFT

(11) **EP 3 097 826 B1**
(45) Veröffentlichungstag und Bekanntmachung des Hinweises auf die Patenterteilung: **18.04.2018**
(21) Anmeldenummer: 16168245.5
(22) Anmeldetag: 04.05.2016
(51) Int. Cl.: A47J 31/44

(54) **GETRÄNKEAUTOMAT**
BEVERAGE VENDING MACHINE
DISTRIBUTEUR AUTOMATIQUE DE BOISSONS

(30) Priorität: 29.05.2015 DE 102015209985
(43) Veröffentlichungstag der Anmeldung: 30.11.2016
(73) Patentinhaber: BSH Hausgeräte GmbH, 81739 München (DE)
(72) Erfinder: Ogrizek, Bostjan, 3320 Velenje (SI); Habe, Mitja, 3320 Velenje (SI); Zevnik, Klemen, 3313 Polzela (SI)

(56) Entgegenhaltungen:
- WO-A1-2012/151629

## Beschreibung

Die vorliegende Erfindung betrifft einen Getränkeautomaten mit einem Flüssigkeitstank und eine diesen zumindest teilweise umgebenden, gehäuseseitigen Aufnahme, gemäß dem Oberbegriff des Anspruchs 1.

Gattungsgemäße Getränkeautomaten sind aus dem Stand der Technik hinlänglich bekannt, wobei zur Anordnung eines Flüssigkeitstanks, insbesondere eines Wassertanks, sowohl eine im Wesentlichen horizontale Aufnahme (siehe die Druckschrift WO 2012/151629 A1, Fig. 10 und 11) als auch eine vertikale Aufnahme bekannt sind. Bei der horizontalen Aufnahme erfolgt das Einsetzen des Flüssigkeitstanks durch ein Einschieben in den Getränkeautomaten, wobei eine endgültige Betriebsposition beispielsweise von einem Rastelement haptisch und/oder akustisch angezeigt wird. Zum Herausnehmen des Flüssigkeitstanks aus dem Getränkeautomaten muss dieses Rastelement jedoch zuerst wieder entriegelt werden, was nicht unbedingt benutzerfreundlich ist.

Die vorliegende Erfindung beschäftigt sich daher mit dem Problem, für einen Getränkeautomaten der gattungsgemäßen Art eine verbesserte oder zumindest eine alternative Ausführungsform anzugeben, welche einerseits eine leichte Montage und Demontage eines Flüssigkeitstanks ermöglicht, diesen jedoch andererseits in einer Betriebsposition zuverlässig fixiert.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem an sich bekannten Getränkeautomaten mit einem Flüssigkeitstank und einer diesen zumindest teilweise umgebenden, gehäuseseitigen Aufnahme, an letzterer eine in Richtung des Flüssigkeitstanks vorgespannte Walze sowie einen Federfinger vorzusehen, die beim Einschieben des Flüssigkeitstanks in die gehäuseseitige Aufnahme solange an einer Seitenwand des Flüssigkeitstanks entlang geführt werden, bis sie in entsprechende Vertiefungen am Flüssigkeitstank eingreifen. Hierzu ist am Flüssigkeitstank eine erste Vertiefung vorgesehen, in welche die Walze bei vollständig in die Aufnahme eingeschobenen Flüssigkeitstank eingreift und eine zweite Vertiefung, in welche der Federfinger bei vollständig in die Aufnahme eingeschobenem Flüssigkeitstank eingreift. Mittels der Walze einerseits und dem Federfinger andererseits kann nicht nur ein vergleichsweise einfaches Montieren bzw. Demontieren, das heißt Einschieben und Herausziehen des Flüssigkeitstanks in die bzw. aus der Aufnahme erreicht werden, sondern die Walze gibt zudem ein haptisches Signal, sofern sie in die erste Vertiefung am Flüssigkeitstank eingreift, wogegen der Federfinger zusätzlich ein akustisches Signal erzeugt, sofern er in die zweite Vertiefung am Flüssigkeitstank eingreift. Hierdurch kann dem Benutzer auf haptische und akustische Weise die endgültige Betriebsposition des Flüssigkeitstanks in der Aufnahme angezeigt werden. Darüber hinaus kann durch die Walze ein vergleichsweise leichtes Wiederherausziehen des Flüssigkeitstanks aus der Aufnahme gewährleistet werden, wodurch sowohl das Einschieben als auch das Herausziehen des Flüssigkeitstanks ohne größeren Kraftaufwand möglich sind. Von besonderem Vorteil bei dem erfindungsgemäßen Getränkeautomaten ist darüber hinaus, dass zum Entfernen des Flüssigkeitstanks aus der Aufnahme dieser einfach herausgezogen werden kann, ohne vorher beispielsweise ein Rastelement entriegeln zu müssen, wodurch ein hoher Bedienkomfort erreicht werden kann.

Bei einer vorteilhaften Weiterbildung der erfindungsgemäßen Lösung ist die erste Vertiefung eine zur Walze komplementäre Rinne. Hierdurch kann einerseits ein vergleichsweise einfaches Fixieren der Walze in der ersten Vertiefung erzielt werden, da die erste Vertiefung eine zur Walze komplementäre Form aufweist, wobei durch diese gewählte Formgebung zugleich auch wieder ein vereinfachtes Herausfahren der Walze aus der ersten Vertiefung bei der Entnahme des Flüssigkeitstanks aus der Aufnahme möglich wird.

Zweckmäßig sind die erste Vertiefung und die zweite Vertiefung vertikal übereinander am Flüssigkeitstank angeordnet. Hierdurch ist es möglich, sowohl den Federfinger als auch die federvorgespannte Walze an nahezu gleicher Position an einer Wand der Aufnahme vorzusehen und ebenso auch die Vertiefungen am Flüssigkeitstank im Wesentlichen an der gleichen Stelle anzuordnen.

In einer weiteren vorteilhaften Ausführungsform der erfindungsgemäßen Lösung weist die Seitenwand des Flüssigkeitstanks an einem in Einschubrichtung vorderen Ende eine Zuführfase auf, welche ein erleichtertes Zuführen der Walze und des Federfingers in die jeweilige Vertiefung ermöglicht. Eine derartige Zuführfase kann beispielsweise durch eine leichte Abschrägung an der Seitenwand erreicht werden, wobei die erste und zweite Vertiefung selbst in einem in Einschubrichtung vorderen Bereich der Seitenwand des Flüssigkeitstanks angeordnet sind. Hierdurch ist eine Verbindung zwischen der Walze bzw. dem Federfinger und dem Flüssigkeitstank ausschließlich in einem kleinen vorderen Bereich des Flüssigkeitstanks gegeben, so dass in dem gesamten übrigen Bereich kein Kontakt zwischen dem Flüssigkeitstank und der Walze bzw. dem Federfinger besteht und dadurch ein Einschieben des Flüssigkeitstanks in die Aufnahme bzw. ein Herausziehen desselben aus der Aufnahme vergleichsweise einfach möglich ist.

Weitere wichtige Merkmale und Vorteile der Erfindung ergeben sich aus den Unteransprüchen, aus der Zeichnung und aus der zugehörigen Figurenbeschreibung anhand der Zeichnung.

Ein bevorzugtes Ausführungsbeispiel der Erfindung ist in der Zeichnung dargestellt und wird in der nachfolgenden Beschreibung näher erläutert.

Dabei zeigen, jeweils schematisch,
- Fig. 1: eine Explosionsdarstellung eines erfindungsgemäßen Getränkeautomaten mit aus einer gehäuseseitigen Aufnahme herausgezogenem Flüssigkeitstank,
- Fig. 2: eine Detaildarstellung der Vertiefungen des Flüssigkeitstanks aus Fig. 1,

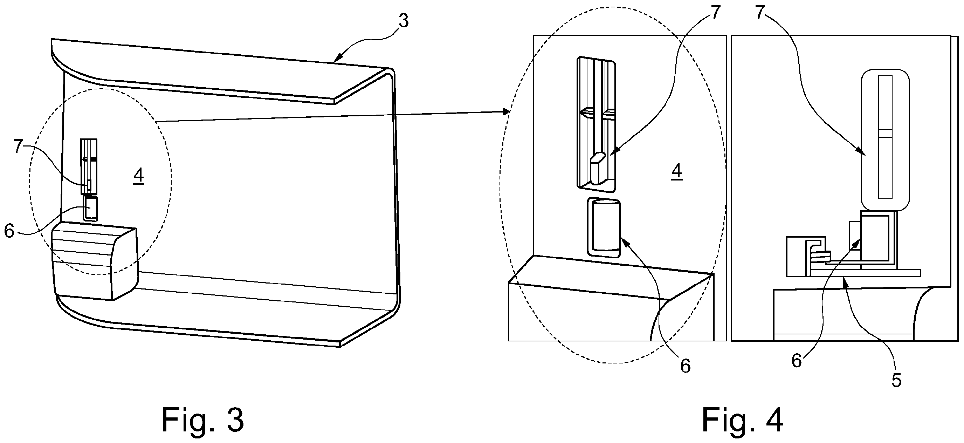

- Fig. 3: eine Innenansicht auf die Aufnahme mit dem Federfinger und der Walze,
- Fig. 4: eine Detailansicht auf die Walze und den Federfinger von innerhalb und außerhalb der Aufnahme,
- Fig. 5: eine Ansicht auf den teilweise in die Aufnahme eingeschobenen Flüssigkeitstank zur Verdeutlichung der unterschiedlichen Schnittebenen,
- Fig. 6a-c: unterschiedliche Querschnitte entlang der Schnittebene VI aus Fig. 5 bei unterschiedlich stark eingeschobenem Flüssigkeitstank,
- Fig. 7a-c: eine Darstellung wie in Fig. 6, jedoch entlang der Schnittebene VII aus Fig. 5.

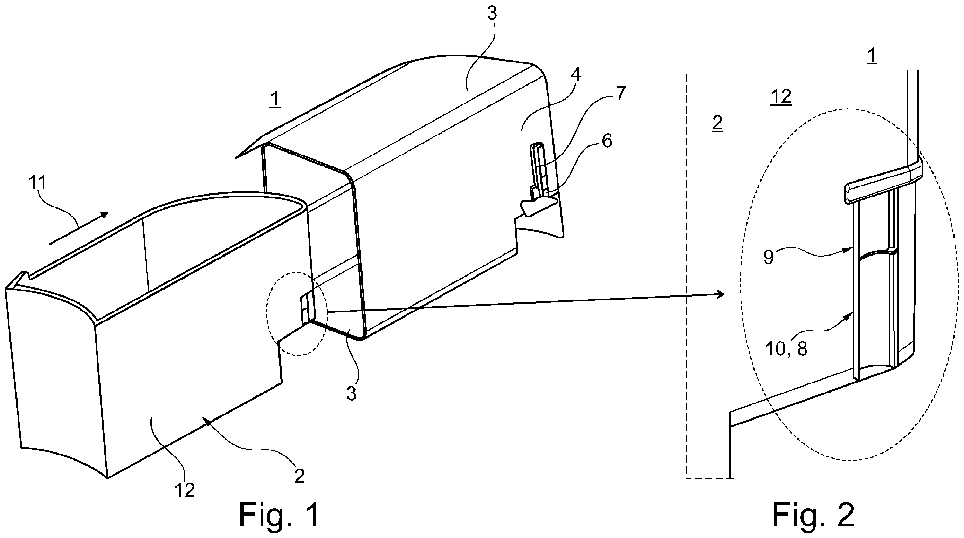

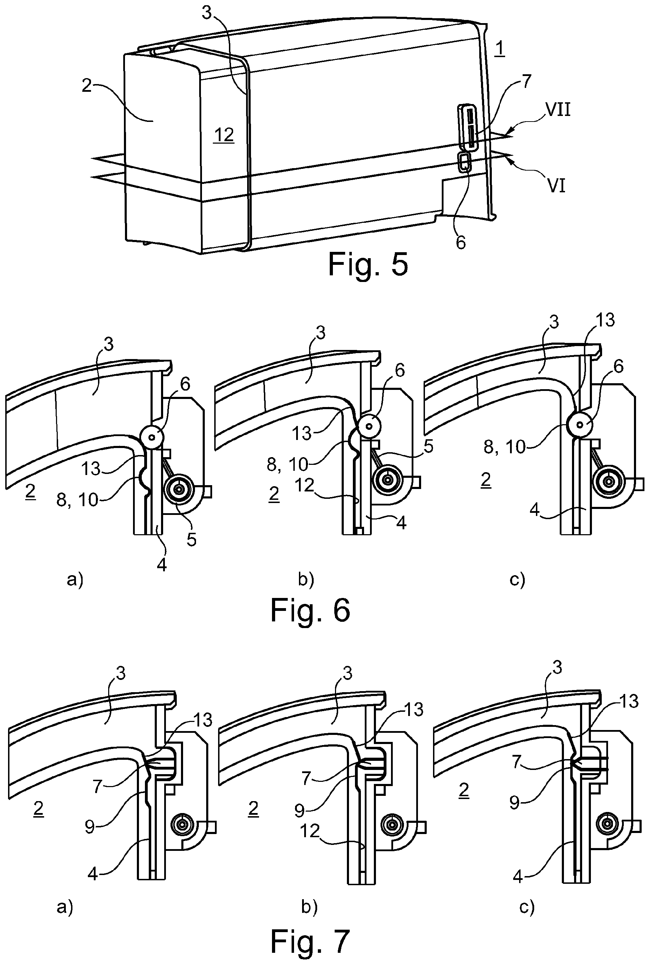

Entsprechend der Fig. 1, weist ein erfindungsgemäßer Getränkeautomat 1 einen Flüssigkeitstank 2 auf, der beispielsweise als Wassertank ausgebildet ist, sowie eine den Flüssigkeitstank 2 zumindest teilweise umgebende, gehäuseseitige Aufnahme 3. Die Aufnahme 3 ist dabei im Wesentlichen komplementär zu einer Außenkontur des Flüssigkeitstanks 2 ausgebildet, so dass dieser im Wesentlichen formschlüssig in der Aufnahme 3 aufgenommen werden kann. An einer Wand 4 der Aufnahme 3 ist dabei erfindungsgemäß eine in Richtung des Flüssigkeitstanks 2 mittels einer Feder 5 vorgespannte Walze 6 vorgesehen, ebenso wie ein Federfinger 7, wobei an dem Flüssigkeitstank 2 eine erste Vertiefung 8 vorgesehen ist, in welche die Walze 6 bei vollständig in die Aufnahme 3 eingeschobenem Flüssigkeitstank 2 eingreift (vergleiche Fig. 6c) und wobei an dem Flüssigkeitstank 2 eine zweite Vertiefung 9 vorgesehen ist, in welche der Federfinger 7 bei vollständig in die Aufnahme 3 eingeschobenem Flüssigkeitstank 2 eingreift (vergleiche Figur 7c).

Die erste Vertiefung 8 ist dabei als eine komplementär zur Walze 6 ausgebildete Rinne 10 ausgebildet, wodurch nicht nur ein formschlüssiges Eingreifen der Walze 6 in die Rinne 10 bzw. die erste Vertiefung 8 möglich ist, sondern auch ein zuverlässiges Halten des Flüssigkeitstanks 2 in der Aufnahme 3, bei vollständig in die Aufnahme 3 eingeschobenem Flüssigkeitstank 2. In dieser Stellung befindet sich der Flüssigkeitstank 2 in seiner Betriebsposition und soll dadurch gegen ein unbeabsichtigtes Herausrutschen gesichert werden.

Betrachtet man die Fig. 1 und 2, so kann man erkennen, dass die erste und die zweite Vertiefung 8, 9 vertikal übereinander angeordnet sind, wobei die zweite Vertiefung 9 rein theoretisch ebenfalls in der Art einer Rinne 10 ausgebildet sein kann, jedoch nicht muss.

Der Federfinger 7 ist vorzugsweise derart ausgebildet, dass er ein akustisches Geräusch erzeugt, wenn er in die zweite Vertiefung 9 eingreift und damit die Betriebsposition des Flüssigkeitstanks 2 innerhalb der Aufnahme 3 anzeigt. Sowohl die erste als auch die zweite Vertiefung 8, 9 sind dabei in einem in Einschubrichtung 11 vorderen Bereich einer Seitenwand 12 des Flüssigkeitstanks 2 angeordnet, wodurch ein Kontakt zwischen der Walze 6 und dem Federfinger 7 einerseits und dem Flüssigkeitstank 2 andererseits ausschließlich unmittelbar vor bzw. beim Eingreifen in die Vertiefungen 8, 9 erfolgt, so dass in allen anderen Stellungen der Flüssigkeitstank 2 vergleichsweise einfach und leicht in der Aufnahme 3 bewegt werden kann.

Betrachtet man insbesondere noch die Querschnittsdarstellungen aus den Fig. 6 und 7, so kann man erkennen, dass die Seitenwand 12 des Flüssigkeitstanks 2 an einem in Einschubrichtung 11 vorderen Ende eine Zuführfase 13 aufweist, welche ein erleichtertes Zuführen der Walze 6 und des Federfingers 7 in die jeweils zugehörige Vertiefung 8, 9 ermöglicht. Die Zuführfase 13 kann dabei als einfache Schräge ausgebildet sein. Generell ist der Flüssigkeitstank 2 üblicherweise als Wassertank ausgebildet und darüber hinaus samt sämtlichen Vertiefungen 8, 9 als Kunststoffspritzgussteil ausgebildet, wodurch eine Herstellung des Flüssigkeitstanks 2 nicht nur äußerst flexibel, sondern zudem auch kostengünstig möglich ist.

Betrachtet man die Darstellungen in den Fig. 6a - c und 7a - c, so sind in diesen die einzelnen Schritte beim Einschieben des Flüssigkeitstanks 2 in die Aufnahme 3 gezeigt. Gemäß den Fig. 6a und 7a gleitet somit zunächst die Walze 6 bzw. der Federfinger 7 entlang der Einführfase 13 an der Seitenwand 12 des Flüssigkeitstanks 2 entlang, bis die Walze 6 bzw. der Federfinger 7 gemäß den Fig. 6b bzw. 7b die höchste Stelle der Einführfase 13 erreicht hat. Bei einem weiteren Einschieben des Flüssigkeitstanks 2 in die Aufnahme 3 greift die Walze 6 in die erste Vertiefung 8 am Flüssigkeitstank 2 ein, während der Federfinger 7 in die zweite Vertiefung 9 eingreift und dabei zugleich ein akustisches Geräusch erzeugt, welches einem Benutzer akustisch anzeigt, dass der Flüssigkeitstank 2 seine endgültige Betriebsposition in der Aufnahme 3 eingenommen hat. Der Federfinger 7 kann dabei aus einem elastischen Material ausgebildet sein und dadurch bei einem Herausziehen des Flüssigkeitstanks 2 aus der Aufnahme 3 einen lediglich geringen Widerstand erzeugen.

Mit dem erfindungsgemäßen Getränkeautomaten kann sowohl ein einerseits einfaches Montieren und Demontieren des Flüssigkeitstanks 2 erfolgen, wobei über die Walze 6 und den Federfinger 7 zugleich haptisch und akustisch angezeigt wird, wenn der Flüssigkeitstank 2 seine endgültige Betriebsposition in der Aufnahme 3 erreicht hat. Auch das Herausziehen des Flüssigkeitstanks 2 aus der Aufnahme 3 ist ohne größeren Kraftaufwand möglich, da die Walze 6 einfach aus der ersten Vertiefung 8 herausrollt. Der Federfinger 7 kann aufgrund seiner Elastizität einfach umgebogen werden. Trotzdem wird der Flüssigkeitstank 2 in seiner Betriebsposition zuverlässig in der Aufnahme 3 fixiert, was insbesondere dem Umstand zu verdanken ist, dass die erste Vertiefung 8 in der Art einer Rinne 10 ausgebildet ist und dadurch die Walze 6 komplementär aufnimmt. Die Feder 5 zur Federvorspannung der Walze 6 kann dabei als einfache Schenkelfeder ausgebildet sein.

### Bezugszeichenliste

- 1: Getränkeautomat
- 2: Flüssigkeitstank
- 3: Aufnahme
- 4: Wand
- 5: Feder
- 6: Walze
- 7: Federfinger
- 8: erste Vertiefung
- 9: zweite Vertiefung
- 10: Rinne
- 11: Einschubrichtung
- 12: Seitenwand
- 13: Zuführfase

## Patentansprüche

1. Getränkeautomat (1) mit einem Flüssigkeitstank (2) und einer diesen zumindest teilweise umgebenden gehäuseseitigen Aufnahme (3), die im Wesentlichen komplementär zum Flüssigkeitstank (2) ausgebildet ist, so dass dieser in die Aufnahme (3) einschiebbar ist, **dadurch gekennzeichnet, dass** an einer Wand (4) der Aufnahme (3) eine in Richtung des Flüssigkeitstanks (2) vorgespannte Walze (6) sowie ein Federfinger (7) angeordnet sind, wobei an dem Flüssigkeitstank (2) eine erste Vertiefung (8) vorgesehen ist, in welche die Walze (6) bei vollständig in die Aufnahme (3) eingeschobenem Flüssigkeitstank (2) eingreift und wobei an dem Flüssigkeitstank (2) eine zweite Vertiefung (9) vorgesehen ist, in welche der Federfinger (7) bei vollständig in die Aufnahme (3) eingeschobenem Flüssigkeitstank (2) eingreift.

2. Getränkeautomat nach Anspruch 1, **dadurch gekennzeichnet, dass** die erste Vertiefung (8) eine zur Walze (6) komplementäre Rinne (10) ist.

3. Getränkeautomat nach Anspruch 1 oder 2, **dadurch gekennzeichnet, dass** die erste und die zweite Vertiefung (8,9) vertikal übereinander angeordnet sind.

4. Getränkeautomat nach einem der Ansprüche 1 bis 3, **dadurch gekennzeichnet, dass** der Federfinger (7) so ausgebildet ist, dass er ein akustisches Geräusch erzeugt, wenn er in die zweite Vertiefung (9) hineinrutscht.

5. Getränkeautomat nach einem der Ansprüche 1 bis 4, **dadurch gekennzeichnet, dass** die erste und die zweite Vertiefung (8,9) in einem in Einschubrichtung (11) vorderen Bereich einer Seitenwand (12) des Flüssigkeitstanks (2) angeordnet sind.

6. Getränkeautomat nach einem der Ansprüche 1 bis 5, **dadurch gekennzeichnet, dass** die Seitenwand (12) des Flüssigkeitstanks (2) an einem in Einschubrichtung (11) vorderen Ende eine Zuführfase (13) aufweist, welche ein erleichtertes Zuführen der Walze (6) und des Federfingers (7) in die jeweilige Vertiefung (8,9) ermöglicht.

7. Getränkeautomat nach einem der Ansprüche 1 bis 6, **dadurch gekennzeichnet, dass** der Flüssigkeitstank (2) als Wassertank ausgebildet ist.

8. Getränkeautomat nach einem der Ansprüche 1 bis 7, **dadurch gekennzeichnet, dass** der Flüssigkeitstank (2) samt Vertiefungen (8,9) als Kunststoffspritzgussteil ausgebildet ist.

## Claims

1. Beverage vending machine (1) with a fluid tank (2) and a holder (3) on the housing side which at least partially surrounds said fluid tank, said holder being embodied substantially to complement the fluid tank (2) so that it can be inserted into the holder (3), **characterised in that** a roller (6) which is prestressed in the direction of the fluid tank (2) and a spring finger (7) are arranged on a wall (4) of the holder (3), wherein a first depression (8) is provided on the fluid tank (2), into which depression the roller (6) engages when the fluid tank (2) is introduced entirely into the holder (3) and wherein a second depression (9) is provided on the fluid tank (2) in which depression the spring finger (7) engages when the fluid tank (2) is inserted entirely into the holder (3).

2. Beverage vending machine (1) according to claim 1, **characterised in that** the first depression (8) is a channel (10) which complements the roller (6).

3. Beverage vending machine according to claim 1 or 2, **characterised in that** the first and the second depression (8, 9) are arranged vertically one above the other.

4. Beverage vending machine according to one of claims 1 to 3, **characterised in that** the spring finger (7) is embodied such that it generates an acoustic noise if it slips into the second depression (9).

5. Beverage vending machine according to one of claims 1 to 4, **characterised in that** in the insertion direction (11) the first and the second depression (8, 9) are arranged in a front region of a side wall (12) of the fluid tank (2).

6. Beverage vending machine according to one of claims 1 to 5, **characterised in that** at a front end in the insertion direction (11) the side wall (12) of the fluid tank (2) has a supply bevel (13), which allows the roller (6) and the spring finger (7) to be supplied into the respective depression (8, 9) more easily.

7. Beverage vending machine according to one of claims 1 to 6, **characterised in that** the fluid tank (2) is embodied as a water tank.

8. Beverage vending machine according to one of claims 1 to 7, **characterised in that** the fluid tank (2) together with depressions (8, 9) is embodied as a plastic injection moulded part.

## Revendications

1. Distributeur de boissons (1) comprenant un réservoir de liquide (2) et un logement (3) entourant celui-ci au moins en partie côté boîtier, lequel logement est réalisé de manière essentiellement complémentaire au réservoir de liquide (2), de sorte que celui-ci est coulissant dans le logement (3), **caractérisé en ce que** sur une paroi (4) du logement (3) sont disposés un rouleau (6) précontraint en direction du réservoir de liquide (2) ainsi qu'un doigt à ressort (7), un premier approfondissement (8) étant ménagé sur le réservoir de liquide (2), dans lequel le rouleau (6) a prise lorsque le réservoir de liquide (2) est complètement inséré dans le logement (3), et un deuxième approfondissement (9) étant ménagé sur le réservoir de liquide (2), dans lequel le doigt à ressort (7) a prise lorsque le réservoir de liquide (2) est complètement inséré dans le logement (3).

2. Distributeur de boissons selon la revendication 1, **caractérisé en ce que** le premier approfondissement (8) est une gouttière (10) complémentaire au rouleau (6).

3. Distributeur de boissons selon la revendication 1 ou 2, **caractérisé en ce que** le premier et le deuxième approfondissements (8, 9) sont disposés verticalement l'un au-dessus de l'autre.

4. Distributeur de boissons selon l'une quelconque des revendications 1 à 3, **caractérisé en ce que** le doigt à ressort (7) est réalisé de manière à ce qu'il génère un bruit acoustique lorsqu'il glisse dans le deuxième approfondissement (9).

5. Distributeur de boissons selon l'une quelconque des revendications 1 à 4, **caractérisé en ce que** le premier et le deuxième approfondissements (8, 9) sont disposés dans une partie avant, en direction d'insertion (11), d'une paroi latérale (12) du réservoir de liquide (2).

6. Distributeur de boissons selon l'une quelconque des revendications 1 à 5, **caractérisé en ce que** la paroi latérale (12) du réservoir de liquide (2) présente dans une extrémité avant, en direction d'insertion (11), un chanfrein d'amenée (13) qui permet d'amener facilement le rouleau (6) et le doigt à ressort (7) dans l'approfondissement respectif (8, 9).

7. Distributeur de boissons selon l'une quelconque des revendications 1 à 6, **caractérisé en ce que** le réservoir de liquide (2) est réalisé comme réservoir d'eau.

8. Distributeur de boissons selon l'une quelconque des revendications 1 à 7, **caractérisé en ce que** le réservoir de liquide (2), y compris les approfondissements (8, 9), est réalisé comme pièce en matière plastique moulée par injection.
